# EUROPEAN PATENT APPLICATION

(11) **EP 4 640 939 A1**
(43) Date of publication of application: **29.10.2025**
(21) Application number: 23912466.2
(22) Date of filing: 21.09.2023
(51) Int. Cl.: D06F 39/10, B01D 35/02

(54) **WASHING MACHINE AND FILTER DEVICE FOR WASHING MACHINE**

(30) Priority: 29.12.2022 KR 20220189118
(71) Applicant: LG Electronics Inc., Yeongdeungpo-gu Seoul 07336 (KR)
(72) Inventor: KIM, Sunwoo, Seoul 08592 (KR); KIM, Beomjun, Seoul 08592 (KR); CHA, Seungchul, Seoul 08592 (KR); KIM, Youngho, Seoul 08592 (KR)
(74) Representative: Schornack, Oliver
(86) International application number: PCT/KR2023/014338
(87) International publication number: WO 2024/143783

(57) **Abstract**

**Abstract:** The present invention provides a washing machine. In addition, the present invention provides a filter device provided in the drain path of a washing machine. The filter device, according to one embodiment, comprises: a first chamber including a water inlet through which washing water is introduced; a second chamber having a water outlet for the washing water; a filter accommodated in the second chamber; and an opening allowing the first chamber and the second chamber to communicate with each other, wherein the washing water introduced through the water inlet passes through the first chamber, the opening, and the filter in said order and is discharged through the water outlet.

## Description

### [Technical Field]

The present disclosure relates to a washing machine and a filter device for a washing machine.

### [Background Art]

Water may be used to wash fabrics such as laundry. This washing is referred to as water washing. During the water washing process, waste fibers and particles (e.g., lint) may be generated. In particular, when washing laundry made of synthetic materials such as acrylic, nylon, or polyester, microplastics or microfibers (hereinafter referred to as "microplastics") may be generated. The microplastics may be discharged through an outlet together with water used for washing. The discharged microplastics may flow into rivers and oceans, potentially causing negative effects on marine ecosystems.

Accordingly, there is a growing need to significantly reduce or eliminate microplastics entering drainage and sewage systems. Recently, due to environmental regulations and/or increased awareness among users, there has been a rising demand for microplastic filters that can be installed in laundry treatment apparatuses (e.g., washing machines).

Microplastics are generally defined as small plastic particles having a size less than 5 mm. Due to their small particle size, microplastics are not easily filtered out with conventional filtration technologies. However, washing machines that are commonly available on the market are typically equipped only with filters that remove relatively large foreign substances contained in the wash drainage, and do not include microplastics filters.

In response to market demand, microplastics filters applicable to washing machines have been proposed. However, microplastics filters suffer from a reduction in filtration efficiency due to the random attachment of microplastics to the pores of the filter, which requires frequent maintenance (e.g., cleaning). Prior art documents WO 2022-118034 A1 and WO 2021-032986 A1 disclose filter units that rotate a filter cage holding a porous rotating member to utilize centrifugal force for filtering microplastics. Although the filters in these prior art documents provide improved filtering efficiency using centrifugal force, they require a driving unit (e.g., a motor) to rotate the filter cage, and energy (e.g., electricity) to drive the motor. As a result, complex sealing structures for the driving unit and energy supply are required, thereby increasing manufacturing costs.
[Patent Document 1] WO 2022-118034 A1
[Patent Document 2] WO 2021-032986 A1

### [Disclosure]

### [Technical Problem]

Accordingly, the present disclosure is directed to providing a filter device and a laundry treatment apparatus that substantially obviates one or more problems described below.

An object of the present disclosure is to provide a plastics filter device capable of minimizing the drainage resistance caused by the filter when the filter is used.

Another object of the present invention is to provide a plastics filter device having a structure that may be installed even in a limited space.

Another object of the present disclosure is to provide a plastics filter device that may be installed at a location easily accessible by a user and that has a structure facilitating filter replacement, thereby offering excellent maintainability.

Another object of the present invention is to provide a plastics filter device in which the filter has a relatively large area and the water is evenly distributed and diffused on the front surface of the filter before drainage, thereby reducing drainage resistance.

Another object of the present disclosure is to provide a plastics filter device capable of achieving a self-cleaning effect without requiring a separate power transmission device.

Another object of the present disclosure is to provide a plastics filter device capable of extending the cleaning periodicity and/or replacement periodicity of the filter by achieving a self-cleaning effect.

Another object of the present disclosure is to provide a plastics filter device in the form of an external unit that may be installed in a laundry treatment apparatus according to the user's needs.

Another object of the present disclosure is to provide a plastics filter device capable of obtaining a siphon break effect without a separate siphon breaker provided in the laundry treatment apparatus.

The objects that can be achieved with the embodiments are not limited to what has been particularly described hereinabove and other objects not mentioned herein will become apparent to those skilled in the art from the following detailed description.

### [Technical Solution]

The present disclosure provides a washing machine. In addition, it provides a filter device arranged in a drain flow passage of the washing machine. In one embodiment, the filter device may include a first chamber including a water inlet allowing wash water to be introduced therethrough, a second chamber having a water outlet for the wash water, a filter accommodated in the second chamber, and an opening allowing the first chamber and the second chamber to communicate with each other therethrough. The wash water introduced through the water inlet may sequentially pass through the first chamber, the openings, and the filter, and be discharged through the water outlet.

In another aspect of the present disclosure, a filter device may include a case having a water inlet and a water outlet, a partition wall arranged inside the case and dividing an interior of the case into a first chamber and a second chamber, an opening provided in the partition wall and allowing the first chamber and the second chamber to communicate with each other therethrough, and a filter accommodated in the second chamber of the case. The wash water introduced through the water inlet sequentially may sequentially pass through through the first chamber, the openings, and the filter, and be discharged through the water outlet.

According to an embodiment of the present disclosure, water introduced into the filter device through the water inlet first fills the first chamber. The introduced water does not immediately flow into the second chamber but instead fills the first chamber. The first chamber, separated from the second chamber, restricts immediate filling of the second chamber. This may prevent the filter accommodated in the second chamber from being fully submerged. If the filter were fully submerged, microplastics may randomly adhere to all parts of the filter, increasing drainage resistance. In contrast, the structure of the embodiment may prevent the filter from being submerged and prevent microplastics from randomly adhering to all parts of the filter, thereby avoiding increased drainage resistance.

In one embodiment, the filter device may further include a guide portion disposed downstream of the opening to guide the wash water flowing into the second chamber from the opening to side surfaces of the filter. The wash water discharged through the opening and guided to the side surfaces of the filter by the guide portion may separate particles stuck to the side surfaces of the filter and direct the separated particles to a bottom portion of the filter.

In one embodiment, the guide portion may include a guide surface extending downward from the opening and toward the side surfaces of the filter.

In one embodiment, the guide portion may be an inclined surface of an inner wall of the opening.

In one embodiment, the filter may include left and right side surfaces, front and rear surfaces, and a bottom surface, wherein a vertical length of the left and right side surfaces may be greater than a distance between the left and right side surfaces, such that particles separated from the left and right side surfaces may be stacked up from lower portions of the left and right side surfaces so as to maintain filtering performance of the left and right side surfaces of the filter.

In one embodiment, the filter may include the left and right side surfaces, the front and rear surfaces, and the bottom surface, wherein a distance between the front and rear surfaces may be greater than the distance between the left and right side surfaces.

In one embodiment, the filter may be detachable from the second chamber.

In one embodiment, the filter device may further include a drawer configured to accommodate the filter. The drawer is withdrawable from the second chamber in a forward direction.

In one embodiment, the drawer may include a discharge portion communicating with the water outlet.

In one embodiment, the filter is removable from the drawer through an open top of the drawer.

In one embodiment, left and right side surfaces of the drawer may be spaced apart from the left and right side surfaces of the filter by a predetermined distance, wherein a bottom surface of the drawer may be spaced apart from the bottom surface of the filter by a predetermined distance.

In one embodiment, the drawer may include at least one of spacer protrusions provided on the both side surfaces of the drawer, or a support provided on the bottom surface of the drawer.

In one embodiment, the bottom surface of the drawer may be inclined downward toward the water outlet.

In one embodiment, the filter device may further include a coupling member detachably attached to an outer surface of one of the first chamber and the second chamber at a predetermined position.

In one embodiment, the filter device may further include a coupling member detachably attached to an outer surface of the case at a predetermined position.

In one embodiment, the coupling member may include a magnetic member or friction member.

In one embodiment, the water inlet and water outlet may be positioned on a rear side of the washing machine equipped with the filter device.

### [Advantageous Effects]

According to embodiments of the present disclosure, a filter device may minimize the drainage resistance caused by a filter by preventing the filter from being submerged in water.

According to embodiments of the present disclosure, a filter device may minimize the drainage resistance caused by a filter by preventing the filter from being submerged in water.

According to embodiments of the present disclosure, a filter device may be installed even in the narrow side space of a laundry treatment apparatus.

According to embodiments of the present disclosure, a filter device may be installed in a location that is easily accessible by a user, thereby facilitating replacement of the filter.

According to embodiments of the present disclosure, a filter device may secure a filter with a relatively large area, and may reduce drainage resistance by evenly distributing and diffusing water over the front surface of the filter during drainage.

According to embodiments of the present disclosure, a filter device may achieve a self-cleaning effect without requiring a separate power transmission device.

According to embodiments of the present disclosure, a filter device may extend the cleaning periodicity and/or replacement periodicity of the filter by achieving a self-cleaning effect.

According to embodiments of the present disclosure, a filter device may be provided in the form of an external unit and may thus be installed in a laundry treatment apparatus according to the user's needs.

According to embodiments of the present disclosure, a filter device may control the siphon effect during drainage without a siphon breaker. While Korean Utility Model No. 20-0165755 discloses a conduit control means (siphon breaker) that controls the siphon function in a drum washing machine, the filter device according to embodiments of the present disclosure may function as a siphon breaker, thus controlling the siphon effect without the need for a separate siphon breaker.

The effects of the present disclosure are not limited to those described above, and other unmentioned effects will be apparent to those skilled in the art from the present specification and the accompanying drawings.

### [Description of Drawings]

FIG. 1 is an external perspective view of a laundry treatment apparatus according to an embodiment of the present disclosure.
FIG. 2 is a diagram illustrating a fluid flow in the laundry treatment apparatus according to an embodiment of the present disclosure.
FIG. 3 is a perspective view of a plastics filter device according to one embodiment of the present disclosure as seen from the front right side.
FIG. 4 is a perspective view of the plastics filter device as seen from the front left side according to the embodiment of the present disclosure.
FIG. 5 is an exploded perspective view of the plastics filter device according to an embodiment of the present disclosure.
FIG. 6 is a cross-sectional perspective view of the plastics filter device according to an embodiment of the present disclosure.
FIG. 7 is a schematic cross-sectional view of the plastics filter device according to an embodiment of the present disclosure, taken along line I-I' of FIG. 2.
FIG. 8 is a view showing water movement through a partition in FIG. 7, indicated by arrows.
FIG. 9 is a perspective view of a member according to a first embodiment of the present disclosure.
FIG. 10 is a perspective view of a member according to a second embodiment of the present disclosure.
FIG. 11 is a schematic view illustrating the water flow in a case where the second embodiment of the present disclosure is applied.
FIG. 12 is a schematic view illustrating the water flow in a case where a third embodiment of the present disclosure is applied.
FIG. 13 is a schematic view illustrating the water flow in a case where a fourth embodiment of the present disclosure is applied.
FIG. 14 is a cross-sectional view of the plastics filter device schematically illustrating the structure where the fifth embodiment is applied, taken along line I-I' of FIG. 2.
FIG. 15 is a perspective view of a member according to the fifth embodiment of the present disclosure.
FIG. 16 is a schematic view illustrating the water flow in a case where the fifth embodiment of the present disclosure is applied.
FIG. 17 is a cross-sectional view of the plastics filter device schematically illustrating the structure where a sixth embodiment is applied, taken along line I-I' of FIG. 2.
FIG. 18 is a perspective view of a member according to the sixth embodiment of the present disclosure.
FIG. 19 is a schematic view illustrating the water flow in a case where the sixth embodiment of the present disclosure is applied.

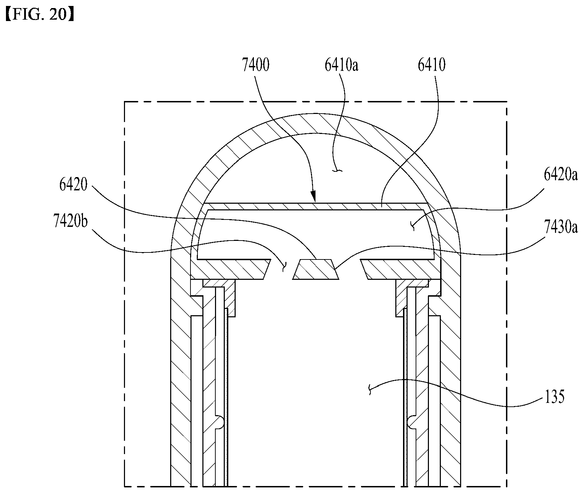

FIG. 20 is a partially enlarged cross-sectional view of the plastics filter device to which a seventh embodiment of the present disclosure is applied.

### [Mode for Disclosure]

Hereinafter, embodiments of the present disclosure will be described in detail with reference to the accompanying drawings to provide a further understanding of the present disclosure to those of ordinary skill in the art

It will be apparent to those skilled in the art that the present disclosure may be implemented in various different embodiments and is not limited to the embodiments described herein. In the drawings, parts irrelevant to the description have been omitted in order to clearly describe the present disclosure. Wherever possible, the same reference numbers will be used throughout the specification to refer to the same or like parts.

In this specification, descriptions deemed redundant are generally omitted.

### <Definition of Terms>

In the following description, the term "laundry treatment apparatus" refers to any device that includes the function of washing clothes. For example, the laundry treatment apparatus may be a washing machine.

As used in the following description, the term "treatment of laundry" refers to treatments such as washing, sterilization, bleaching, softening, and drying performed on laundry. The treatment of laundry may be achieved by cycles and courses performed by the laundry treatment apparatus. One or more cycles are combined to form a course. One or more cycles are arranged in chronological order and may be combined to form a course. The cycles include a wash cycle, a rinse cycle, a dehydration cycle, a cooling cycle, and a refresh cycle. The wash cycle is a process of separating foreign matter attached to the laundry with water and detergent. The rinse cycle is a process of separating the laundry and the foreign matter with water. The dehydration cycle is a process of removing water from the laundry. The drying cycle is a process of removing moisture from the laundry. The cooling cycle is a process of reducing the temperature of heated laundry. The refresh cycle is a process of performing one or more of deodorization, wrinkle removal, and sterilization of laundry using one or more of air or steam.

As used in the following description, the terms "top side," "bottom side," "left side," "right side," "front side" and "rear side" are to be understood with reference to the coordinate system in the referenced drawings. These terms are used for ease of description, and are merely intended to intuitively describe relative positional relationships. However, they are not intended to limit the disclosure. For ease of description, reference will be made to a coordinate system, wherein the upper side is denoted by Z, the left side by X, and the front side by Y. In the illustrated embodiments, the front side of the washing machine is defined as front, and the rear side of the washing machine is defined as rear.

In this specification, when a component is referred to as being "connected" or "coupled" to another component, it should be understood that it may be "directly connected" or "directly coupled" to the other component, or that there may be other components between the components. On the other hand, when a component is referred to in this specification as being "directly connected" or "directly coupled" to another component, it should be understood that there are no other components between the components.

The terms used in this specification are merely used to describe particular embodiments and are not intended to limit the present disclosure. For example, in order to facilitate understanding of embodiments, when a lower-level term (e.g., "spring") is used instead of a higher-level term (e.g., "elastic member"), this is merely intended to describe the embodiments and are not to limit the disclosure to the lower-level concept.

As used herein, the singular forms "a," "an," and "the" include plural referents unless context clearly dictates otherwise.

As used herein, the terms "includes" or "has" are intended to specify the presence of the features, numbers, steps, operations, components, parts, or combinations thereof disclosed in the specification, and are not to be understood as precluding the possibility of the presence or addition of one or more other features, numbers, steps, operations, components, parts, or combinations thereof.

As used herein, the term "and/or" includes a combination of a plurality of listed items or any of the plurality of listed items. For example, "a and/or b" means "a and b," "a," or "b." Furthermore, "a or b" may be interpreted as meaning "a," "b," or "both a and b."

### <Embodiment>

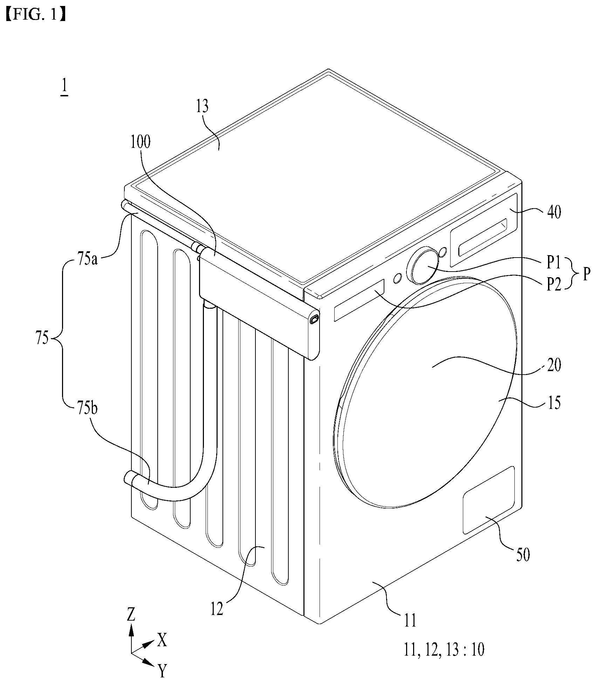

The overall structure of a laundry treatment apparatus will now be described with reference to FIG. 1.

As an embodiment of the laundry treatment apparatus 1, a washing machine will be described by way of example. The external appearance of the laundry treatment apparatus 1 is defined by a cabinet 10.

The cabinet 10 may include a combination of a front panel 11, a left panel (not shown), a right panel 12, a top panel 13, and a rear panel (not shown). An internal space is defined within the cabinet 10. Components constituting the laundry treatment apparatus 1, such as a drum 20, may be arranged in the internal space of the cabinet 10.

The front panel 11 is arranged at the front side of the cabinet 10. A door 15 is installed on the front panel 11.

A detergent opening may be formed in the front panel 11. A detergent storage unit 40 is inserted into the detergent opening. The detergent storage unit 40 may be put into or drawn out of the cabinet 10 by the user.

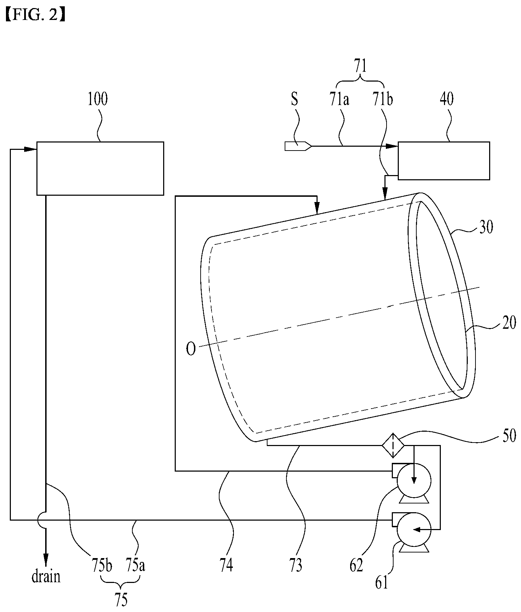

A filter opening may also be formed in the front panel 11. A drain filter 50 may be inserted into the filter opening. The drain filter 50 is configured to collect foreign substances from the wash water. The drain filter 50 may be arranged on one side of a lower portion of the front panel 11. The drain filter 50 may be connected to a first drain flow passage 73 (see FIG. 2) through which water is discharged from the tub 30. The drain filter 50 may filter out foreign substances from the wash water discharged from the tub 30 after the washing process. The drain filter 50 may be put into or drawn out of the cabinet 10 by the user through the filter opening. When withdrawn, the drain filter 50 may be cleaned and reused, or replaced. In the embodiment, the drain filter 50 may function as a pre-processing filter of a plastics filter unit 100, which will be described later.

A plastics filter device 100 according to an embodiment of the present disclosure will now be described. The plastics filter device 100 may be coupled to the exterior of the cabinet 10. The plastics filter device 100 may be coupled to a side panel. The plastics filter device 100 is coupled to an upper portion of the surface constituting the side panel. In installation environments of laundry treatment apparatuses 1 in some countries, a drain is positioned approximately 75 cm higher than the floor on which the laundry treatment apparatus 1 is placed. Since the plastics filter device 100 utilizes the phenomenon of water falling, it is preferably installed at a higher level than the drain. FIG. 1 illustrates the plastics filter device 100 coupled to an upper portion of the surface constituting the right panel 12.

The plastics filter device 100 may be installed in a drain flow passage 75.

Hereinafter, the position of the plastics filter device 100 in the drain flow passage of the washing machine in this embodiment will be described with reference to FIG. 2.

Water required for laundry treatment in the laundry treatment apparatus 1 is supplied from a water source S. The water source S may be a municipal water supply. In one embodiment, the supplied water may be delivered to the tub 30 via a supply flow passage 71.

A detergent storage unit 40 may be arranged in the supply flow passage 71. The supplied water may flow into the detergent storage unit 40. The detergent or fabric softener stored in the detergent storage unit 40 may be delivered to the tub together with the supplied water.

The supply flow passage 71 may include a first supply pipe 71a connecting the water source S and the detergent storage unit 40, and a second supply pipe 71b connecting the detergent storage unit 40 and the tub 30.

A discharge flow passage 73 is connected to the lower portion of the tub 30. Water (e.g., wash water or rinsing water) is discharged from the tub 30 to the outside of the tub through the discharge flow passage 73. In the embodiment, the drain filter 50 may be arranged in the discharge flow passage 73. Water discharged through the discharge flow passage 73 moves to the drain flow passage 75. The pump pressure that enables water to flow along the drain flow passage 75 after being discharged from the discharge flow passage 73 may be provided by a drain pump 61.

In the embodiment, the discharge flow passage 73 connects the tub 30 and the drain pump 61. When the drain pump 61 operates, the water introduced into the drain pump 61 is discharged to the drain flow passage 75. The plastics filter unit 100 is arranged in the drain flow passage 75. Water discharged from the tub 30 is filtered through the plastics filter unit 100 before being drained.

The illustrated laundry treatment apparatus further includes a water circulation structure. Accordingly, the water discharged into the discharge flow passage 73 may also flow into a circulation passage 74. The water discharged from the discharge flow passage 73 may either flow through the drain flow passage 75 to be drained (case 1), or flow through the circulation passage 74 to be resupplied to the tub 30 (case 2). Case 1 occurs when the drain pump 61 is operated and the circulation pump 62 is not operated. Case 2 occurs when the circulation pump 62 is operated and the drain pump 61 is not operated.

The plastics filter device 100 filters water introduced through a first drain hose 75a and discharges the filtered water through a second drain hose 75b. In the cycle where water is drained through a drain hole, water is filtered by the plastics filter device 100. The plastics filter device 100 filters the draining water in case 1 described above. In the embodiment, such operation as in case 1 is performed occurs during the rinsing and spinning cycles.

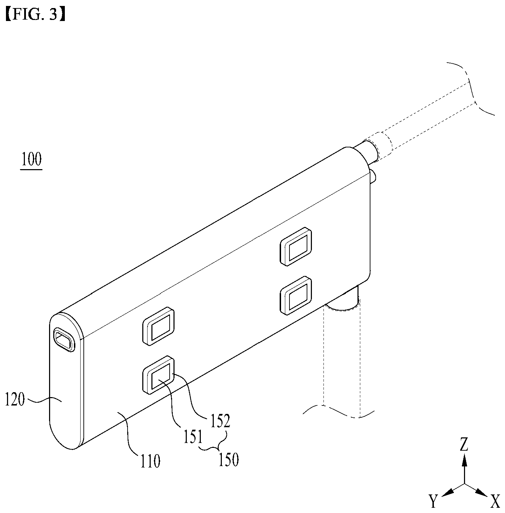

FIG. 3 is a perspective view of a plastics filter device according to one embodiment of the present disclosure as seen from the front left side.

The plastics filter device 100 according to one embodiment may be provided as an external unit. In this embodiment, the plastics filter device 100 is located outside the cabinet 10. The user may separately purchase the plastics filter device 100 and install the same on the laundry treatment apparatus 1. By installing the plastics filter device 100, the function of the laundry treatment apparatus 1 may be upgraded.

To improve the ease of installation of the plastics filter device 100, the plastics filter device 100 may further include an attachment part 150. The attachment part 150 may be arranged on a case 110. The attachment part 150 according to one embodiment may include a magnetic member 151 and a friction member 152.

The magnetic member 151 may be a magnet. Since the cabinet 10 is generally made of metal, the plastics filter device 100 may be attached to a desired position on the cabinet 10 using the magnetic force of the magnetic member 151. The magnetic force provided by the magnetic member 151 must be sufficient to withstand at least the weight of the plastics filter device 100 with the interior thereof filled with wash water to the maximum. The number and arrangement of the magnetic members 151 may be designed to provide the necessary magnetic force.

The friction member 152 may provide frictional force to prevent the plastics filter device 100 from moving from a fixed position thereof. The friction member 152 according to the embodiment may be made of a high-friction material such as rubber, silicone, or TPE. In the illustrated embodiment, the friction member 152 is arranged to surround the magnetic member 151. Even when the magnetic member 151 provides strong magnetic force, it may not resist slipping caused by vibration or the like. The friction member 152 may provide sufficient frictional force to prevent the position of the plastics filter device 100 from being changed in response to such slipping.

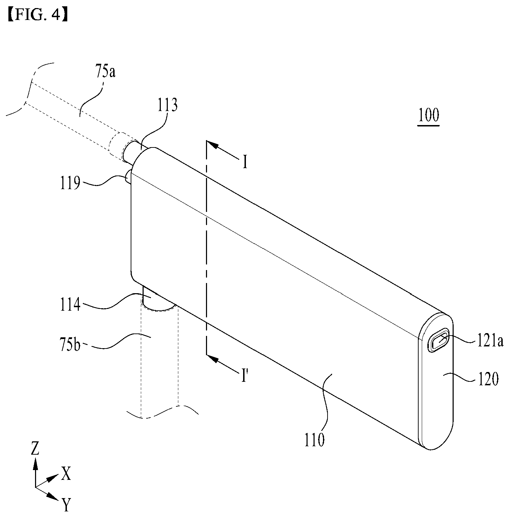

Hereinafter, the structure of the plastics filter device 100 will be described with reference to FIG. 4.

The plastics filter device 100 according to one embodiment may include a case 110 and a drawer 120.

A space is formed inside the case 110. The case 110 may include an inlet port 113 and an outlet port 114. The inlet port 113 is formed on the rear side of the case 110 and may extend rearward. The inlet port 113 may be formed at an upper portion of the case 110 on the rear side. The inlet port 113 may be connected to the first drain hose 75a. The outlet port 114 is formed at the bottom side of the case 110 and may extend downward. The outlet port 114 may be located at a rear portion of the case 110 on the bottom side. The outlet port 114 may be connected to the second drain hose 75b.

According to one embodiment, the case 110 may further include a valve port 119. The valve port 119 may be formed below the inlet port 113. The valve port 119 is connected to an upper portion of a second chamber 112, which will be described later. A check valve 119a is installed in the valve port 119. The structure and function of the second chamber 112 and the check valve 119a will be described in detail later.

The case 110 may accommodate the drawer 120. The drawer 120 may be withdrawn from and pushed into the case 110. A handle 121a may be formed on the front of the drawer 120. In the illustrated embodiment, the handle 121a is formed as an opening into which the user's fingers may be inserted. However, the handle 121a is not limited to the illustrated and described embodiment as long as it serves the function of a handle.

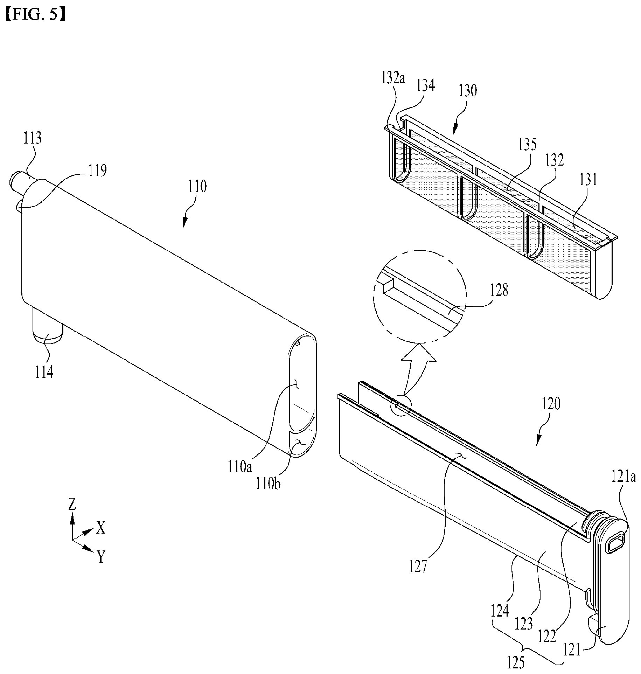

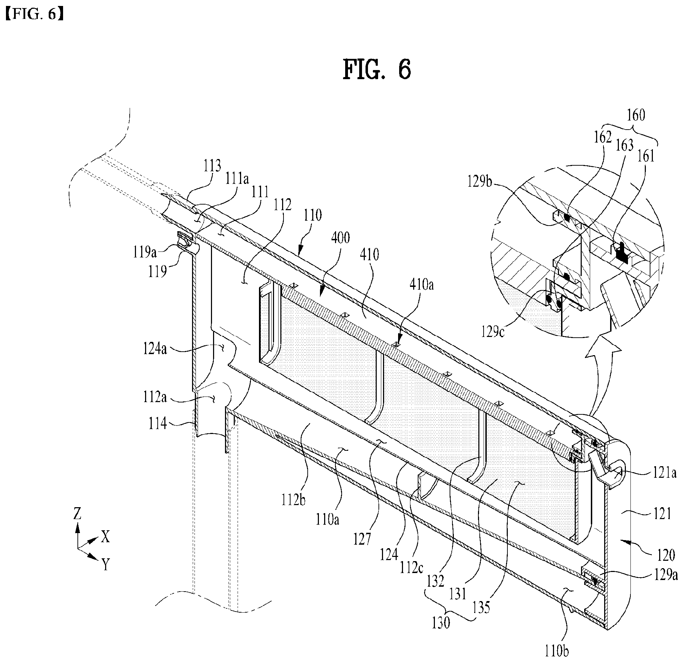

Hereinafter, the structure of the plastics filter device 100 will be described in detail with reference to FIGS. 5 and 6.

The plastics filter device 100 according to one embodiment includes a case 110, a drawer 120, and a filter 130. The filter 130 is accommodated in the drawer 120. The drawer 120 is accommodated in the case 110. The drawer 120 may be moved forward to be removed from the case 110. The filter 130 may be removed upward from the drawer 120.

The internal space 110a of the case 110 may include a first chamber 111 and a second chamber 112. The first chamber 111 is in communication with the second chamber 112. In addition, the first chamber 111 is in communication with the inlet port 113, and the second chamber 112 is in communication with the outlet port 114.

The drawer 120 is detachably accommodated in the second chamber 112. The filter 130 is detachably accommodated in the drawer 120. Accordingly, the filter is accommodated in the second chamber 112 (see FIG. 6).

Water introduced into the inlet port 113 flows sequentially through the first chamber 111, the filter 130, the second chamber 112, and the outlet port 114. Microplastics contained in the water are filtered out by the filter 130. Also, water flowing from the first chamber 111 into the filter 130 strikes the wall surface of the filter 130, dislodging microplastics attached to the wall surface. That is, in this embodiment, microplastics adhering to the wall surface of the filter 130 may be removed without a separate driving source (Self-cleaning).

In the embodiment, the internal space of the case may further include a third chamber 110b. The third chamber 110b may store tools (not shown, e.g., cleaning brushes) used to clean the filter 130.

The structure of the drawer 120 is described below.

The drawer 120 may include a front portion 121, a first side portion 122, a second side portion 123, and a bottom portion 124. The drawer 120 is configured to allow at least the water that has passed through the filter 130 to flow out. To discharge the water that has passed through the filter 130, the drawer 120 may not include a rear portion. Alternatively, a drawer outlet 124a may be formed in the bottom portion 124 of the drawer 120. In the illustrated embodiment, the drawer 120 is provided without a rear portion, and also includes the drawer outlet 124a formed in the bottom portion 124. The structure of the drawer 120 may be combined with the internal structure of the case 110 to form an efficient discharge structure through the drawer outlet 124a. The filter 130 may be accommodated in an internal space 127 defined by the front portion 121, the first side portion 122, the second side portion 123, and the bottom portion 124 of the drawer 120.

Seating portions 128 on which the filter 130 are mounted may be formed on the first side portion 122 and the second side portion 123. In the embodiment, the seating portions 128 are provided on the top surfaces of the first side portion 122 and the second side portion 123 and may be recessed downward from the top surfaces.

The filter 130 according to one embodiment includes a filtration member 131. The filtration member 131 filters microplastics separated from laundry. As water passes through the filtration member 131, particles contained in the water are filtered out.

In the embodiment, the filtration member 131 is provided with holes that are sufficiently small to filter out microplastics. By definition, microplastics refer to particles smaller than 5 mm. Thus, the filtration member 131 may be provided with holes capable of filtering out particles smaller than 5 mm. The filtration member 131 may be formed of various materials, such as steel, fiber (e.g., nylon), or resin.

The filter 130 may further include a frame 132. The frame 132 maintains the filtration member 131 in a desired shape. The frame 132 is arranged to hold the filtration member 131 in a "U" shape when viewed from the front. The shape of the frame 132 is not limited to the illustrated shape and may be formed, for example, in a lattice structure.

A seating portion 132a may be formed on the frame 132. The seating portion 132a is formed to protrude outward from an upper end of the filter 130. It protrudes far enough to rest on the seating portion 128 of the drawer 120. As the seating portion 132a of the filter 130 rests on the seating portion 128 of the drawer 120, the placement position of the filter 130 in the drawer 120 may be restricted to a specified location.

An overflow opening 134 may be formed in the filter 130. The overflow opening 134 allows water to be discharged when particles filtered out by the filter 130 accumulate to clog the filter 130 as to make the water no longer flow to the outside. When water flow is blocked, it may negatively affect components such as the drain pump 61. In this case, it is advantageous to forcibly discharge the water. Therefore, the overflow opening 134 is formed the filter 130 to allow water to overflow when the filter's capacity is exceeded. The overflow opening 134 may be formed in an upper portion of the filter 130. In the illustrated embodiment, the overflow opening 134 is provided as a groove recessed to a certain depth downward from the top of the frame 132.

The inside of the filter 130 may be defined as a filter chamber 135. The filter chamber 135 may be defined by the filtration member 131 and the frame 132. The top of the filter chamber 135 is open. The left side, right side, and bottom portions of the filtration member 131, along with the front of the frame 132, may define the filter chamber 135. Based on the filter chamber 135, the overflow opening 134 is formed in an upper portion of the filter chamber 135.

In the embodiment, when viewed from the front, the filter 130 has a shorter horizontal (left-to-right) length than its vertical (top-to-bottom) length. According to the embodiment of the present disclosure, the width of the case 110 may be reduced by using a filter 130 with a short horizontal length, and thus it may be installed even in narrow spaces. In the embodiment, when viewed from a side, the filter 130 has a longer front-to-back length than its vertical length. According to the embodiment of the present disclosure, despite the limitations of a narrow width and a required installation position higher than the drain, a long front-to-back filter 130 may be employed so as to be installed in a narrow space, while ensuring a sufficiently large area of the filtration member 131. In general technical knowledge, filters used in the drainage system of washing machines are typically cylindrical. Narrowing the width of the filter narrows the internal space of the filter, increasing drainage resistance. Therefore, filters are not usually made narrow but are formed in a cylindrical shape. Additionally, to equalize the drainage pressure of water introduced into the filter, it is standard practice to use a cylindrical filter, allow water to be introduced into the top center of the cylindrical filter, and discharge the water through the bottom center.

In the present disclosure, the left-to-right length of the filter 130 is shortened to allow the plastics filter device to be installed in a narrow space. Further, to ensure sufficient filtering area, the front-to-back length of the filter 130 is increased. According to the embodiment of the present disclosure, despite the shape of the filter 130, the drainage resistance caused by the filter 130, which increases with use of the filter 130, may be minimized. Details of the embodiment and technical principles for minimizing drainage resistance may be referenced in the description of the first chamber 111 and the second chamber 112.

Additionally, the vertical length of the filter 130 may be made greater than the distance between the left and right side surfaces of the filter. In the embodiment providing a self-cleaning function, the filter 130 dislodges particles attached to the left and right side surfaces thereof. The dislodged particles are stacked up from the lower portion of the left and right side surfaces of the filter 130, thereby maintaining the filtering performance of the side surfaces of the filter 130.

Hereinafter, a more detailed description of the plastics filter device 100 is provided with reference to FIG. 6.

The plastics filter device 100 according to one embodiment includes a first chamber 111, a second chamber 112, a filter 130, and a partition wall 400.

As described above, the plastics filter device 100 according to one embodiment may include a case 110, a drawer 120 detachably arranged in the case 110, and a filter 130 detachably arranged in the drawer 120.

The case 110 defines a predetermined space and includes the first chamber 111 and the second chamber 112, which communicate with each other. The first chamber 111 is in communication with the inlet port 113, and the second chamber 112 is in communication with the outlet port 114.

The drawer 120 is detachably accommodated in the second chamber 112. The filter 130 is detachably accommodated in the drawer 120. According, the filter 130 is accommodated in the second chamber 112.

Therefore, water (wash water) introduced into through the inlet port 113 flows sequentially through the first chamber 111, the filter 130, the second chamber 112, and the outlet port 114. Microplastics contained in the water are filtered out by the filter 130. Also, water flowing from the first chamber 111 into the filter 130 strikes the wall surface of the filter 130, dislodging microplastics collected on the wall surface. That is, in this embodiment, microplastics adhering to the wall surface of the filter 130 may be removed without a separate driving source (Self-cleaning).

The partition wall 400 is provided in the case 110. The internal space 110a of the case 110 is divided into an upper space and lower space by the partition wall 400. The upper space is the first chamber 111, and the lower space is the second chamber 112. The partition wall 400 has an opening 410a, which allows the first chamber 111 and the second chamber 112 to communicate with each other.

The drawer 120 is arranged in the second chamber 112. The filter 130 is arranged in the drawer 120. According, the filter 130 is disposed in the second chamber 112.

An additional partition wall 112b (a bottom surface 112b) may be provided at the bottom of the second chamber 112. The space between the additional partition wall 112b and the lower inner wall of the case 110 is the third chamber 110b. Cleaning tools may be stored in the third chamber 110b. For simplicity, in this embodiment, the additional partition wall 112b is present.

Hereinafter, each component will be described in detail.

The first chamber 111 is the space where the water introduced into the plastics filter device 100 is accommodated first. The first chamber 111 has a long length in the front-to-back direction. The first chamber 111 has a narrow width in the left-to-right direction. The specific dimensions of the length and width of the first chamber 111 are design considerations. However, one of the technical challenges recognized by a person skilled in the art is the realization of a structure that may be installed in a narrow space. Therefore, expressions like "long" and "narrow" should be understood appropriately within the context of achieving this design goal. At least the length in the front-to-back direction is greater than the width in the left-to-right direction. A narrow width in the left-to-right direction means that it is narrower than a typical cylindrical structure. The narrow width is compensated for by the long front-to-back length to ensure a sufficient filtering area. As a result, the microplastics filter 100 may be installed even in a narrow space next to the laundry treatment device 1. Furthermore, even in a space with sufficient width, a better aesthetic appearance may be achieved.

The first chamber 111 includes a water inlet 111a. The water inlet 111a may be formed at the rear of the first chamber 111. The term "rear" does not limit the meaning to just the rear surface. The water inlet 111a may also be formed at the rear portion of the top surface of the first chamber 111. The water inlet 111a communicates with the inlet port 113. The inlet port 113 may extend from the water inlet 111a of the case 110.

The water inlet 111a introduces water into the bottom surface defining the first chamber 111. In the embodiment, the bottom surface defining the first chamber 111 is the top surface 410 of the partition wall 400. The water entering through the water inlet 111a is temporarily accommodated in the first chamber 111. The temporarily accommodated water then falls into the second chamber 112 through the opening 410a. As the water falls, it sweeps down the wall surface of the filter 130, causing the microplastics adhered to the wall surface of the filter 130 to be separated from the wall surface of the filter 130. That is, in this embodiment, microplastics adhered to the wall surface of the filter 130 are separated from the wall surface of the filter 130 without the need for a separate driving source. Accordingly, a kind of self-cleaning may be performed.

The filter 13 is accommodated in the second chamber 112. In the embodiment, the drawer 120 is accommodated in the second chamber 112, and the filter 130 is accommodated in the drawer 120. When removing the filter 130 from the second chamber 112, any residual water remaining in the filter 130 may flow out and potentially contaminate the exterior of the device. By employing the drawer 120 of the illustrated type, the bottom surface of the drawer 120 may prevent residual water in the filter 130 from flowing down when the user draws out the drawer 120. Thus, user convenience is improved.

The second chamber 112 has a long length in the front-to-back direction. The second chamber 112 has a narrow width in the left-to-right direction. The specific dimensions of the length and width of the second chamber 112 are design considerations. However, one of the technical challenges recognized by a person skilled in the art is the realization of a structure that may be installed in a narrow space. Therefore, expressions like "long" and "narrow" should be understood appropriately within the context of achieving this design goal. At least the length in the front-to-back direction is greater than the width in the left-to-right direction. The length and width of the second chamber 112 and the filter 130 may be designed appropriately within the scope of the technical objects, considering the interaction between the second chamber and the filter.

In the embodiment, the vertical length of the second chamber 112 is greater than the vertical length of the first chamber 111. The front-to-back length of the second chamber 112 may be equal to the front-to-back length of the first chamber 111. Also, the width of the second chamber 112 may be equal to the width of the first chamber 111. The volume of the second chamber 112 may be larger than the volume of the first chamber 111.

Since the second chamber 112 is where filtration is actually performed, it is advantageous to ensure that the volume of the second chamber 112 is sufficient to maximize the area of the filter 130. The first chamber 111 serves as a buffer before water enters the second chamber 112. Water introduced through the water inlet 111a does not immediately flow into the second chamber 112 but is temporarily stored in the first chamber 111. The separation between the first chamber 111 and the second chamber 112 prevents water from immediately filling the second chamber 112. Thus, the filter 130 accommodated in the second chamber 112 is prevented from becoming fully submerged. If the filter becomes completely submerged, microplastics may randomly adhere to various parts of the filter, increasing drainage resistance. The structure of the embodiment may prevent full submersion of the filter 130 and prevent random adhesion of microplastics to the filter 130. Accordingly, drainage resistance may be prevented from increasing.

The second chamber 112 includes a water outlet 112a. The water outlet 112a may be formed at the lower side of the second chamber 112. The term "lower side" does not limit the meaning to just the bottom surface. The water outlet 112a may be formed in a lower portion of the rear surface of the second chamber 112. In this embodiment, the water outlet 112a may be disposed at the rear, just like the water inlet 111a. That is, the water outlet 112a may be formed at the lower rear side of the plastics filter device 100. Generally, the drain flow passage 75 of the laundry treatment device 1 is provided at the rear. According, by disposing both the water inlet 111a and the water outlet 112a are at the rear of the plastics filter device 100, the drain flow passage 75 may be prevented from being elongated. The length of the drain flow passage 75 is related to drainage resistance. Increasing the length of the drain flow passage 75 is less favorable for drainage, and requires higher pump pressure from the drain pump 61. According to the embodiment, the microplastics filter device 100 may be positioned closer to the front of the laundry treatment device 1 to improve usability while reducing the length of the drain flow passage 75.

The bottom surface 112b defining the second chamber 112 is sloped down towards the water outlet 112a. In the absence of a third chamber 110b, the lower inner surface of the case 110 may also be sloped down towards the water outlet 112a. In the illustrated embodiment, the main structure guiding water towards the water outlet 112a is the bottom portion 124 of the drawer 120. Thus, in this embodiment, the bottom portion 124 of the drawer 120 is sloped down towards the water outlet 112a.

The water outlet 112a communicates with the outlet port 114. The outlet port 114 extends from the water outlet 112a of the case 110. Water passing through the filter chamber 135 exits through the water outlet 112a.

The filter 130 is accommodated in the second chamber 112. The bottom surface of the filter 130 is spaced apart from the bottom surface defining the second chamber 112. In this embodiment, the second chamber 112 is substantially defined by the drawer 120. Accordingly, the bottom surface of the filter 130 is spaced apart from the bottom portion 124 of the drawer 120. The side surfaces of the filter 130 are also spaced apart from the side surfaces defining the second chamber 112. In this embodiment, the second chamber 112 is substantially defined by the drawer 120. Accordingly, the side surfaces of the filter 130 are spaced apart from the left and right side portions 122 and 123 of the drawer 120.

The lower inner surface of the second chamber 112 may be provided with a support 112c that protrudes upward. The support 112c may support the drawer 120.

In the embodiment, the partition wall 400 separates the first space 110a of the case 110 into the first chamber 111 and the second chamber 112. That is, the first chamber 111 and the second chamber 112 may be defined by the case 110 and the partition wall 400.

In the embodiment, the partition wall 400 and the case 110 are provided to be separable from each other. For example, the partition wall 400 may be separated from the case 110. When the partition wall 400 is provided to be separable from the case 110 as a separate component, assemblability and productivity may be improved. However, the present disclosure does not exclude the configuration in which the partition wall 400 and the case 110 are integrally formed.

A valve port 119 is provided in an upper portion of the second chamber 112. A check valve 119a is arranged in the valve port 119. The check valve 119a prevents the water in the second chamber 112 from leaking out. The check valve 119a allows external air to enter the inside. In the embodiment, when the drain pump 61 operated during a cycle of the laundry treatment apparatus 1 stops, the water remaining in the first drain hose 75a flows back into the laundry treatment apparatus 1. In this case, the inside of the plastics filter device 100 becomes slightly negatively pressurized. Under this negative pressure condition, draining through the second drain hose 75b may not be smoothly performed. The check valve 119a equalizes the pressure inside and outside of the plastics filter device 100 to ensure smooth drainage. The check valve 119a is configured to open even under weak negative pressure, allowing external air to enter the inside of the plastics filter device 100, while preventing water inside the plastics filter device 100 from overflowing. When the drain pump 61 stops and the inside of the plastics filter device 100 becomes slightly negatively pressurized, the check valve 119a opens, and a siphon break effect is achieved. The siphon break effect may help prevent continuous drainage of wash water.

According to the embodiment of the present disclosure, the siphon effect during drainage may be controlled without requiring an additional siphon break. Korean Utility Model No. 20-0165755 discloses a conduit control means (siphon break) for controlling the siphon function of a drum washing machine. According to the embodiment of the present disclosure, the microplastics filter device 100 functions as a siphon break, allowing the siphon effect to be controlled without the need for a separate siphon break.

The drawer 120 is detachably accommodated in the case 110. Accordingly, a waterproof seal is necessary between the case 110 and the drawer 120. The structure of the waterproof seal is described below.

In the embodiment, a portion 129b of the part protruding from the front part 121 of the drawer 120 is inserted into the first chamber 111. Portions 129a and 129c of the part protruding rearward from the front part 121 of the drawer 120 are inserted into the second chamber 112.

The drawer 120 may include a first sealing member 161 that contacts the inner surface of the case 110 defining the front of the first space 110a to seal the open front of the case 110. The drawer 120 includes a first sealing seat 129a protruding rearward from the front part 121 and having a shape corresponding to the first space 110a. The first sealing member 161 may be fitted into the first sealing seat 129a.

The drawer 120 may also include a second sealing member 162 that contacts the wall surfaces defining the front of the first chamber 111 to seal the front opening of the first chamber 111. The second sealing member 162 may be fitted into a second sealing seat 129b. The second sealing seat 129b protrudes rearward from the front part 121 of the drawer 120 and may have a shape corresponding to the first chamber 111. In the illustrated embodiment, the second sealing seat 129b protrudes from the first sealing seat 129a.

The drawer 120 may further include a third sealing member 163 for watertightness at the portion that contacts the filter 130. The portion where the drawer 120 contacts the filter 130 forms a space that defines the filter chamber 135, and may therefore be configured to be watertight. The third sealing member 163 may be fitted into the third sealing seat 129c. In the illustrated embodiment, the third sealing seat 129c extends downward from the second sealing seat 129b.

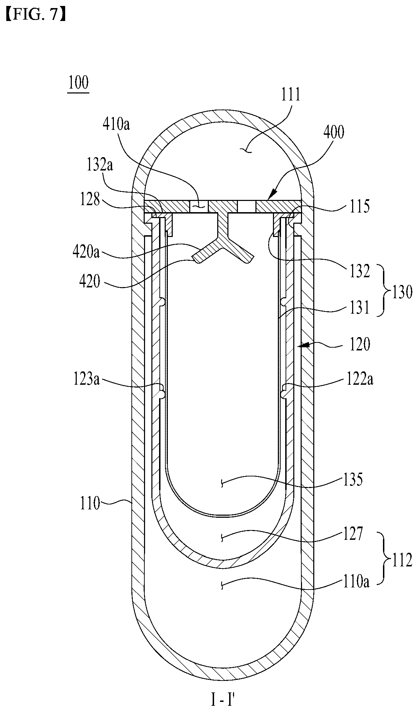

The positional relationship between the drawer 120 and the filter 130 inside the case 110 is described below with reference to FIG. 7.

The filter 130 is seated on the seat 128 of the drawer 120. The filter 130 may be supported by the drawer 120 when it is seated on the seat 128. The seat 128 may be formed as a step. The upper end of the frame 132 of the filter 130 may be placed on the seat 128. The upper end of the frame 132 has a seating portion 132a that protrudes outward.

The drawer 120 may be supported by a guide protrusion 115 that protrudes from the inner wall of the case 110. The drawer 120 may be guided along the guide protrusion 115 during insertion or removal thereof. The guide protrusion 115 may extend in the front-to-back direction.

The side surface of the filter 130 and the inner side surface of the drawer 120 may be spaced apart from each other. To assist in maintaining the spacing between the filtration member 131, which defines the side surface of the filter 130, and the inner side surface of the drawer 120, spacer protrusions 122a and 123b that protrude inward may be formed on the inner side surface of the drawer 120. Multiple spacer protrusions 122a and 123b may be formed. The spacer protrusions 122a and 123b may extend in the front-to-back direction. In the embodiment, the spacer protrusions 122a and 123b may extend continually in the front-to-back direction. Water may flow down through the gaps where the spacer protrusions 122a and 123b are intermittently discontinuous.

The partition wall 400 may include a guide portion 420. The guide portion 420 guides water passing through the opening 410a toward the inner surface of the filter 130. The guide portion 420 may include a guide surface 420a.

In one embodiment, the guide portion 420 may be provided at the bottom surface of the partition wall 400. The guide portion 420 may protrude downward from the bottom surface of the partition wall 400. The guide portion 420 may include a first extension portion that extends downward from the bottom surface of the partition wall 400. The guide portion 420 may include a second extension portion and a third extension portion, which extend to the left and right at a predetermined angle from the lower end of the first extension portion. The top surfaces of the second and third extension portions may form the guide surface 420a.

In an embodiment, the guide surface 420a is inclined toward the side surfaces of the filter 130. In the illustrated embodiment, one guide surface 420a is inclined toward the left side surface of the filter 130, and the other guide surface 420a is inclined toward the right side surface of the filter 130. The guide surfaces 420a are inclined downward. Particularly, the guide surfaces 420a are inclined toward the upper portions of the side surfaces of the filter 130. Water guided by the guide surfaces 420a sweeps down the side surfaces of the filter 130. When water guided by the guide surface 420a to reach the upper portions of the side surfaces of the filter 130, it may sweep down foreign matter from the upper portions of the side surfaces of the filter 130, thereby implementing a self-cleaning function.

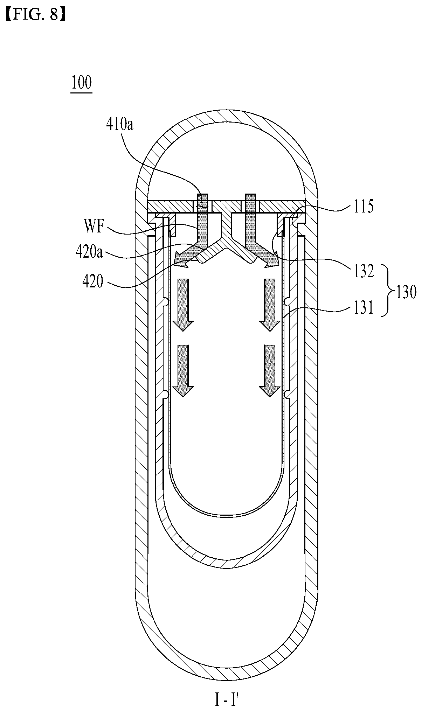

Hereinafter, the self-cleaning according to the present disclosure is described with reference to FIGS. 7 and 8.

Water guided by the guide surfaces 420a strikes the upper portions of the side surfaces of the filter 130. In the embodiment, water guided by the guide surfaces 420a strikes the filtration member 131 that defines the side surfaces of the filter 130. As the water strikes the side surfaces of the filter 130 and flows downward, particles adhered to the filtration member 131 may be separated from the filtration member 131. This operation may be described as cleaning the side surfaces of the filtration member 131. The particles adhered to the filter 130 may then be collected at the bottom of the filter 130. In other words, the particles filtered from the water can be collected from the bottom of the filter 130 in the upward direction. This may prevent the particles from randomly adhering to the surface of the filter 130. This may also prevent the fine holes of the filtration member 131 from being clogged by particles as to require cleaning of the filter 130 for the normal function of the filter 130 even though the filter 130 still has effective filtering capacity. In other words, the cleaning periodicity of the filter 130 may be extended.

In the illustrated embodiment, the guide surfaces 420a are formed on the guide portion 420, which protrude downward from the partition wall 400 and constitute the partition wall 400, and are positioned below the openings 410a. However, the guide surfaces 420a only need to perform the function of guiding water to the side surfaces of the filter 130.

Hereinafter, various embodiments of the aforementioned partition wall 400 and guide portion 420 will be described.

### <First Embodiment>

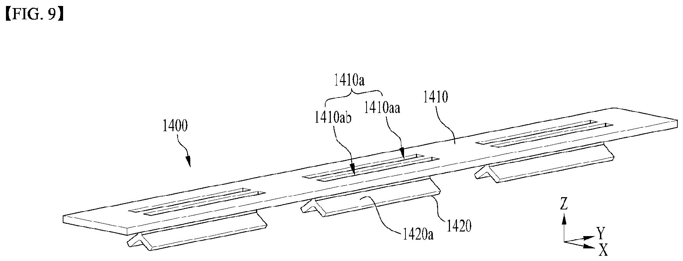

FIG. 9 is a perspective view of a partition wall 1400 according to a first embodiment of the present disclosure.

The partition wall 1400 has an opening 1410a formed therein. Below the opening 1410a, a guide portion 1420 is positioned. A guide surface 1420a is formed on the guide portion 1420. The guide portion 1420 has an inverted 'Y' shape when viewed from the front. The opening 1410a is formed as a long slit in the front-to-back direction. The opening 1410a includes a pair of an opening 1410aa formed to discharge water to the right side and an opening 1410ab formed to discharge water to the left side. Multiple openings 1410a are arranged in the front-to-back direction.

The front-to-back length of the opening may be substantially equal to the front-to-back length of the guide portion the same.

### <Second Embodiment>

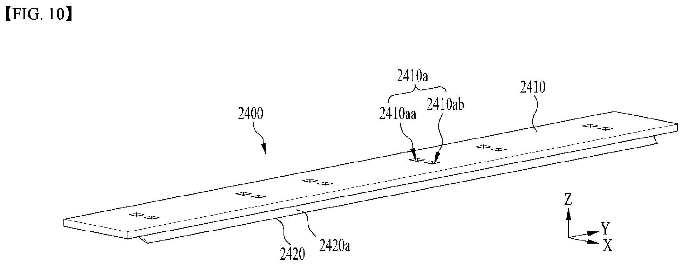

FIG. 10 is a perspective view of a partition wall according to a second embodiment of the present disclosure.

The opening 1410a includes a pair of an opening 1410aa formed to discharge water to the right side and an opening 1410ab formed to discharge water to the left side. Multiple openings 1410a are arranged in the front-to-back direction.

The guide surface 2420a may be a curved surface. The guide surface 2420a may have a decreasing slope as it extends downward.

The differences between the first and second embodiments are in the shape and number of openings, the length of the guide portion, and the shape of the guide portion. In the second embodiment, the partition wall 2400 may include multiple small openings 2410a. The guide portion 2420 may include a pair of guide portions extending in the front-to-back direction.

In the following description, the differences from the first embodiment will be mainly discussed.

The openings 2410a are formed in a rectangular shape. In the embodiment, the size and number of the openings 2410a may be used to design the water pressure. That is, the water pressure may be appropriately designed by adjusting the ratio between the total cross-sectional area of the openings 2410a and the cross-sectional area of the water inlet 111a.

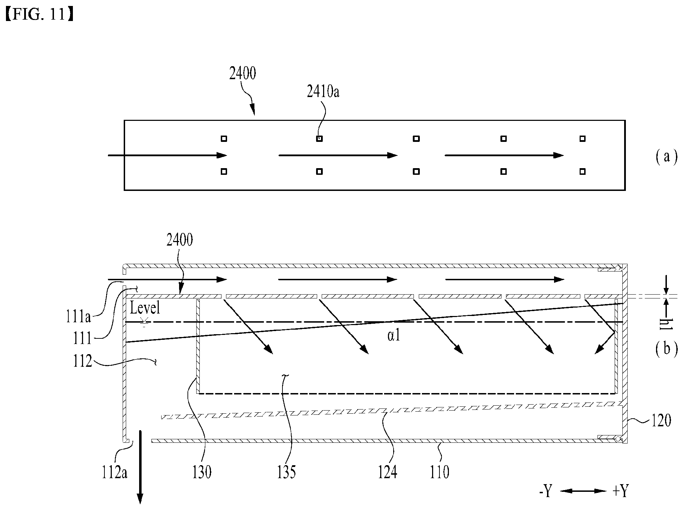

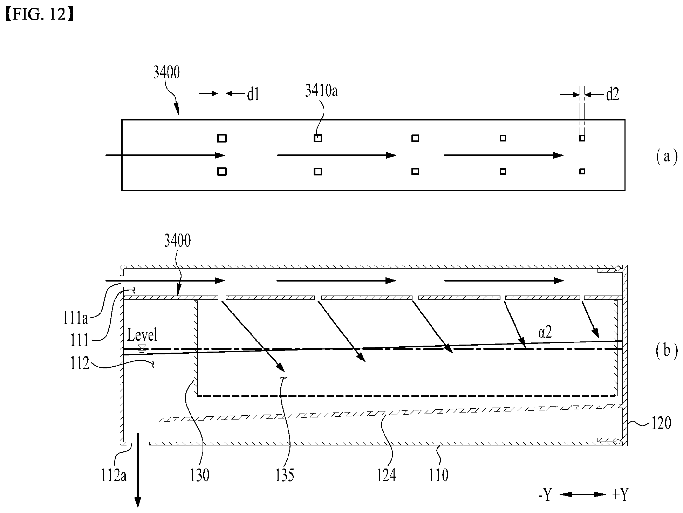

The water flow in the second embodiment is described with reference to FIG. 11. In the embodiment, water flows into the first chamber 111 through the water inlet 111a. The water flows in the direction from the rear (-Y) to the front (+Y). Specifically, since the water flows into the water inlet 111a by means of the drain pump 61 (see FIG. 2), the water introduced through the water inlet 111a has a predetermined pressure. The water falling through the openings flows in an inclined direction, that is, toward the +Y direction. As a result, the water surface has a predetermined inclination angle (∠a1) rather than being horizontal, and the water level is higher at the front. According to the embodiment described in FIG. 11, the drainage pressure at the rear, where the water level is lower, is relatively lower than when the water level is constant. In the structure where the water outlet 112a is located at the rear, as shown in FIG. 11, the drainage pressure at the rear is weak, which may reduce the drainage efficiency. The embodiments shown and described after FIG. 12 are related to various structures designed to maintain a constant water level.

### <Third Embodiment>

Hereinafter, a third embodiment will be described with reference to FIG. 12.

As described above, in the second embodiment, the drainage pressure at the rear where the water outlet 112a is located is weak, which may decrease the drainage efficiency. Therefore, it is desirable to increase the drainage pressure at the location of the water outlet 112a. In the third embodiment, the drainage pressure at the location of the water outlet 112a may be increased.

The difference between the third embodiment and the second embodiment is the size of the opening.

In the third embodiment, the sizes of the respective openings 3410a are different. The cross-sectional area of each opening 3410a decreases from the rear (-Y) toward the front (+Y). For simplicity, the drawing assumes that the openings 3410a are squares. The cross-sectional area of the opening 3410a located at the uppermost stream (in the -Y direction) is "d1×d1," and the cross-sectional area of the opening 3410a located at the lowermost stream (in the +Y direction) is "d2×d2." Then, "d1×d1" > "d2×d2."

As the size of the opening 3410a decreases, the amount of falling water decreases. Additionally, as the size of the opening 3410a decreases, the +Y direction component of the vector at the angle of the water discharged from the opening 3410a decreases. In other words, the angle of water discharged from a smaller opening 3410a is closer to the right angle.

In comparison to the second embodiment, the slope of the water surface (∠a3) in the third embodiment is gentler. Accordingly, the drainage pressure at the rear is higher than in the second embodiment, resulting in faster drainage. Accordingly, when compared based on the same time period, the average water level in this embodiment is lower than that (Level) in the second embodiment. Thus, the area of the left and right sides of the filter submerged in water may be reduced, thereby improving the filtering efficiency.

### <Fourth Embodiment>

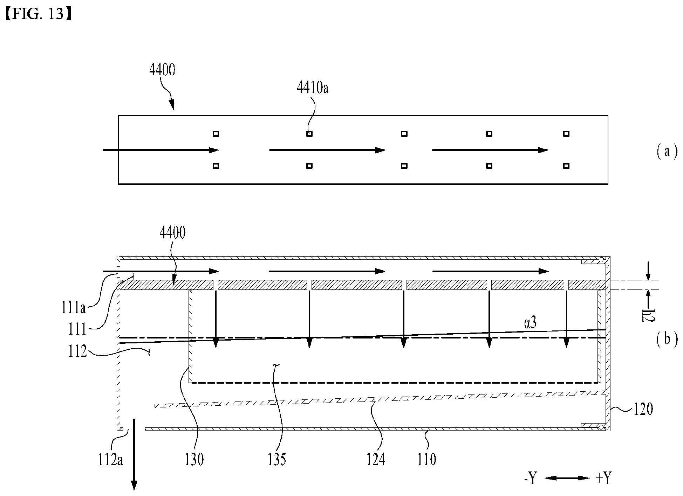

Hereinafter, a fourth embodiment will be described with reference to FIG. 13.

In the fourth embodiment, the drainage pressure in the area where the water outlet 112a is located may be increased. The difference between the fourth embodiment and the second embodiment lies in the height (depth) of the opening.

The openings in the fourth embodiment and those in the second embodiment have the same size and different heights (h1, h2). When the height of the opening 2410a in the second embodiment is h1, and the height of the opening 4410a in the fourth embodiment is h2, h2 > h1.

As the height of the opening 4410a increases, the +Y direction component of the vector at the angle of the water discharged from the opening 4410a decreases. In other words, as the height of the opening 4410a increases, the water discharge angle approaches the right angle. By adjusting the water discharge angle based on the height of the opening 4410a, the water flow may be prevented from being directed forward.

In the second embodiment, the falling water is more influenced by the forward directional straightness of the water flow than in the fourth embodiment, resulting in the water being biased in the +Y direction. However, in the fourth embodiment, by increasing the height of the opening 4410a, the straightness of the water flow in the forward direction may be reduced.

In comparison to the second embodiment, the straightness in the forward direction (+Y) of the falling water is reduced (the drawing illustrates an extreme case where it is almost nonexistent). As a result, the water may be prevented from being biased forward, compared to the second development. This results in a gentler slope (∠a4) of the water surface. In addition, in the structure where the water outlet 112a is located at the rear, the drainage pressure at the rear is higher than in the second embodiment. When compared based on the same period of time, the average water level (Level) is lower than in the second embodiment.

Next, an embodiment that may increase the drainage pressure at the location of the water outlet 112a by changing the structure of the first chamber will be described.

### <Fifth Embodiment>

Hereinafter, a fifth embodiment of the plastics filter device 100 will be described with reference to FIG. 12.

The plastics filter device 100, particularly, the first chamber 111 includes a first flow passage 5410a and a second flow passage 5420a. The first flow passage 5410a and the second flow passage 5420a are elements that guide the flow of water.

One side of the first flow passage 5410a communicates with the water inlet 111a (see FIG. 6), while the opposite side thereof communicates with the second flow passage 5420a. One side of the second flow passage 5420a communicates with the first flow passage 5410a. The second flow passage 5420a communicates with an opening 5420b. In this embodiment, the opening 5420b is formed on the bottom surface that defines the second flow passage.

Water introduced into the water inlet 111a (see FIG. 6) initially flows into the first flow passage 5410a. Water entering the first flow passage 5410a flows forward and enters the second flow passage 5420a at the end of the first flow passage. The water entering the second flow passage 5420a is discharged into the filter chamber 135 of the filter 130 through the opening 5420b.

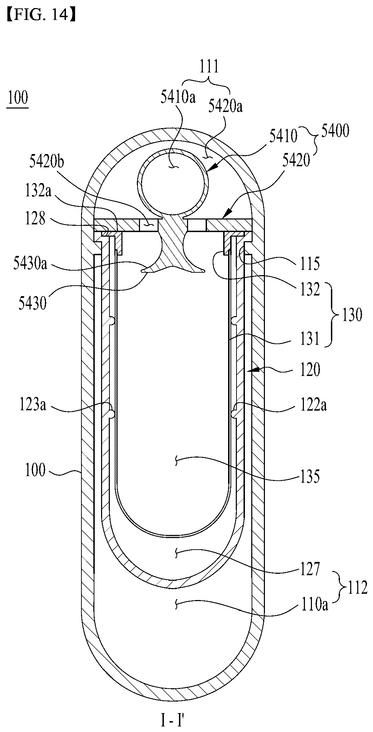

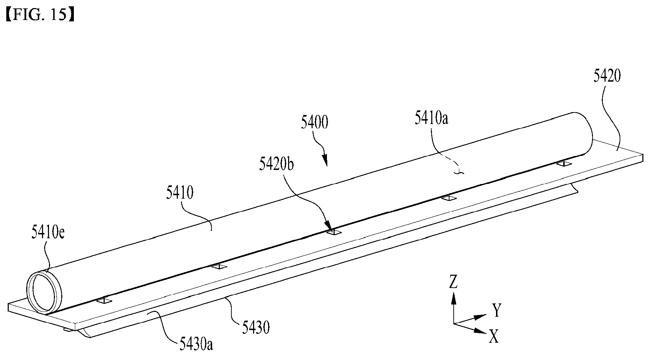

Hereinafter, the partition wall 5420 and partition section 5410 that define the first flow passage 5410a and second flow passage 5420a in the fifth embodiment will be described with reference to FIGS. 14 and 15.

The first flow passage 5410a and the second flow passage 5420a are formed by dividing the first chamber 111. In this embodiment, the first flow passage 5410a and the second flow passage 5420a communicate with each other.

In the embodiment, the first flow passage 5410a and the second flow passage 5420a may be formed by a combination of the partition wall 5420 and partition section 5410. The combined configuration of the partition wall 5420 and partition section 5410 is referred to as a flow passage forming part 5400.

In this embodiment, the flow passage forming part 5400 divides the first space 110a of the case 110 into the first chamber 111 and the second chamber 112.

The partition section 5410 separates the space of the first chamber 111 into the first flow passage 5410a and the second flow passage 5420a. Thus, the interior of the partition section 5410 may be the first flow passage 5410a, and the space between the partition section 5410 and the inner wall of the first chamber 111 may be the second flow passage 5420a.

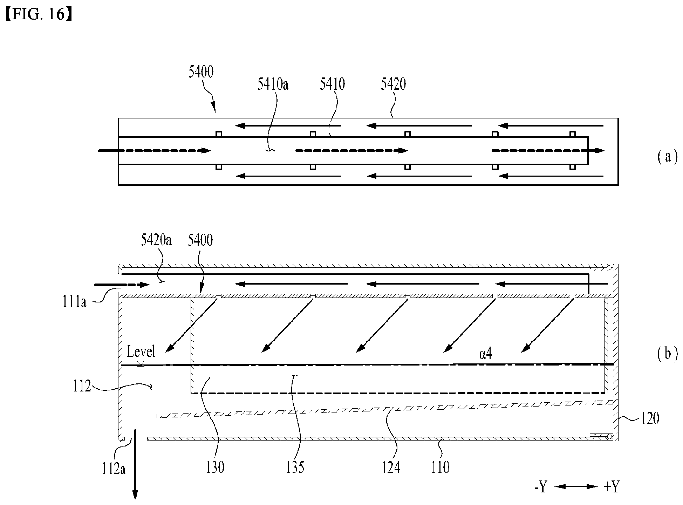

In the illustrated embodiment, the partition section 5410 may be provided as a hollow cylindrical pipe. The rear end of the pipe communicates with the water inlet 111a (see FIG. 16) and may communicate with the second flow passage 5420a. The internal space of the partition section 5410 is defined as the first flow passage 5410a. The remaining space in the first chamber 111 other than the space defined as the first flow passage 5410a is defined as the second flow passage 5420a.

The partition section 5410 may further include a sealing part 1510e. The sealing part 1510e enhances the close contact between the water inlet 111a and the partition section 5410, ensuring that water entering through the water inlet 111a flows only into the first flow passage 5410a defined by the partition section 5410, improving the water tightness.

Referring to FIG. 16, the flow of water in the fifth embodiment of the present disclosure is described.

Water entering through the water inlet 111a flows into the first flow passage 5410a defined within the partition section 5410. The water entering the first flow passage 5410a flows forward and flows into the second flow passage 5420a at the end of the first flow passage. The water entering the second flow passage 5420a is guided backward. Water guided through the second flow passage 5420a flows from the front side (+Y) to the rear side (-Y). The water falls into the second chamber 112 through the opening 1520b. The falling water is deflected toward the rear side (-Y) in the direction of the water flow in the second flow passage 5420a. The water outlet 112a is located at the rear. Accordingly, when the water is deflected toward the rear, drainage may be performed smoothly compared to a case where the water level is higher at the front. Thus, according to the fifth embodiment, the drainage pressure at the water outlet 112a, located at the rear, is higher, and the drainage becomes smoother, allowing the water surface inclination angle (∠a4) to be smaller. Alternatively, the water level at the rear may be higher depending on the situation. Thus, when compared on the same time basis, the average water level (Level) is lower than in the previous embodiments.

### <Sixth Embodiment>

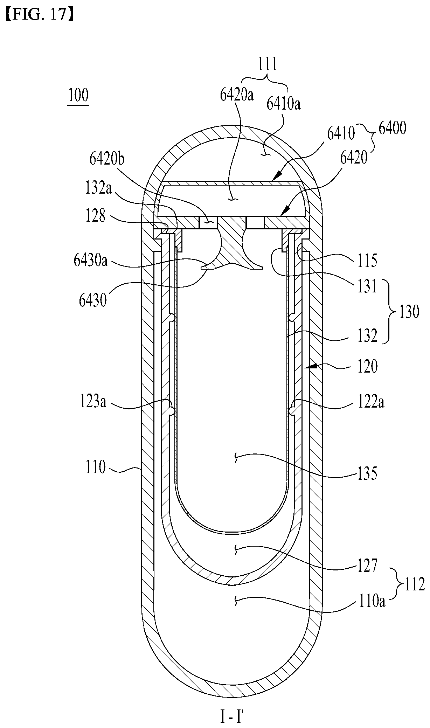

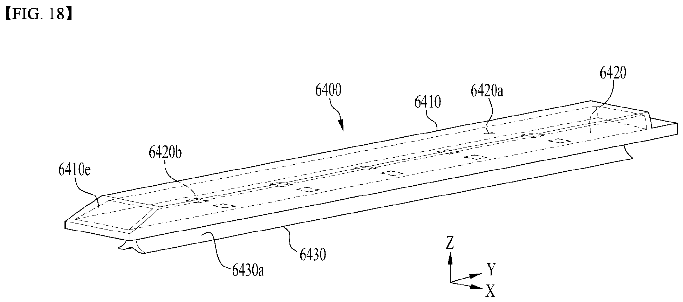

The sixth embodiment will be described with reference to FIGS. 17 and 18. In the following description, the differences from the fifth embodiment will be mainly discussed.

The partition section 6410 divides the first chamber 111 into a first flow passage 6410a and a second flow passage 6420a.

The partition section 6410 may be a partition wall that connects the inner walls of the first chamber 111. The partition wall defining the partition section 6410 may connect the inner walls of the first chamber 111 in an approximately horizontal direction. The upper part separated by the partition section 6410 is the first flow passage 6410a, and the lower part is the second flow passage 6420a.

The partition section 6410 includes a dividing surface 2510e for guiding water introduced through the water inlet 111a into the first flow passage 6410a. The dividing surface 2510e extends downward from the rear of the partition section 6410 and is connected to the partition wall 6420. That is, the dividing surface 2510e blocks the rear of the second flow passage 6420a. The dividing surface 2510e is formed to be inclined. The dividing surface 2510e is formed to be upwardly inclined as it extends from the rear toward the front.

The partition section 6410 may be provided as a single component combined with the partition wall 6420. The combined structure of the partition wall 6420 and the partition section 6410 is referred to as a flow passage forming part 6400.

The outer portion of the partition section 6410 is arranged to contact the inner wall of the first chamber 111. The partition section 6410 has a portion spaced apart from the wall defining the first chamber 111 on the front side. According to the embodiment, the length of the partition section 6410 is less than the length of the partition wall 6420. The front side of the partition wall 6420 is longer than the front side of the partition section 6410. Due to the difference in length between the partition wall 6420 and the partition section 6410, the front side of the partition section 6410 may be spaced apart from the front inner wall of the first chamber 111.

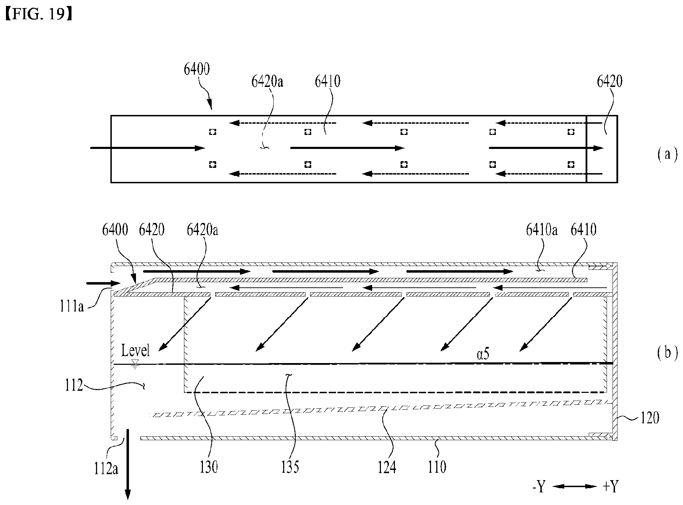

Hereinafter, the water flow in the sixth embodiment will be described with reference to FIG. 19.

Water introduced through the water inlet 111a does not flow into the second flow passage 6420a due to the dividing surface 2510e, but first flows into the first flow passage 6410a. The water guided forward in a first direction (+Y) through the first flow passage 6410a then flows into the second flow passage 6420a and is guided rearward in a second direction (-Y).

Water falls into the second chamber 112 through the opening 6420b. As in the fifth embodiment, the inclination angle (∠a5) of the water surface is relatively small compared to that in other embodiments. Also, when compared on the basis of the same time, the average water level (Level) is lower. For details of the principle, refer to the description provided in the fifth embodiment.

### <Seventh Embodiment>

In the following description, the differences from the sixth embodiment will be mainly discussed.

In this embodiment, the guide portion of the sixth embodiment is not required. Instead, the opening 7420b may perform the role of the guide portion. The opening 7420b is described below.

A pair of openings 7420b may be formed on the left and right sides. The guide surface 7430a guides water passing through the opening 7420a towards the side surfaces of the filter 130. One guide surface 7430a is inclined towards the left side surface of the filter 130, and the other guide surface 7430a is inclined towards the right side surface of the filter.

The structure of the openings 7420b in this embodiment may also be applied to the first, second, and third embodiments of guide portion described above. In other words, in the first, second, and third embodiments of the guide portion described above, the openings 7420b of this embodiment may be adopted in place of the guide portion.

Although the present disclosure has been illustrated and described in connection with specific embodiments, it will be apparent to those skilled in the art that various modifications and changes can be made without departing from the spirit and scope of the disclosure as defined by the appended claims.

### [Description of Reference Numerals]

Front: +Y
Rear: -Y
Laundry treatment apparatus: 1
Cabinet: 10
Plastics filter device: 100
Front panel: 11
Case: 110
First space: 110a
Third chamber: 110b
First chamber: 111
Water inlet: 111a
Second chamber: 112
Water outlet: 112a
Bottom surface: 112b
Inlet port: 113
Outlet port: 114
Guide protrusion: 115
Valve port: 119
Check valve: 119a
Right panel: 12
Drawer: 120
Front portion: 121
Handle: 121a
First side portion: 122
Second side portion: 123
Bottom portion: 124
Drawer outlet: 124a
Drawer body: 125
Internal space: 127
Seating portion: 128
First sealing seat: 129a
Second sealing seat: 129b
Third sealing seat: 129c
Top panel: 13
Filter: 130
Filtration member: 131
Frame: 132
Seating portion: 132a
Overflow opening: 134
Filter chamber: 135
Partition wall: 1400
Top surface: 1410
Opening: 1410a
Opening: 1410aa
Opening: 1410ab
Guide portion: 1420
Guide Surface: 1420a
Door: 15
Attachment part: 150
Magnetic member: 151
Friction member: 152
Sealing member: 160
First sealing member: 161
Second sealing member: 162
Third sealing member: 163
Drum: 20
Partition wall: 2400
Top surface: 2410
Opening: 2410a
Opening: 2410aa
Opening: 2410ab
Guide portion: 2420
Guide surface: 2420a
Tub: 30
Partition wall: 3400
Opening: 3410a
Detergent storage unit: 40
Partition wall: 400
Opening: 410a
Guide portion: 420
Guide surface: 420a
Partition wall: 4400
Opening: 4410a
Flow passage forming part: 5400
Partition section: 5410
First flow passage: 5410a
Sealing part: 5410e
Partition wall: 5420
Opening: 5420a
Second flow passage: 5420a
Opening: 5420b
Guide portion: 5430
Guide surface: 5430a
Filter unit: 50
Drain pump: 61
Circulation pump: 62
Flow passage forming part: 6400
Partition wall: 6420
First flow passage: 6410a
Dividing surface: 6410e
Second flow passage: 6420a
First flow passage: 6410a
Opening: 6410a
Second flow passage: 6420a
Guide portion: 6430
Guide surface: 6430a
Supply flow passage: 71
First supply pipe: 71a
Second supply pipe: 71b
Discharge flow passage: 73
Circulation flow passage: 74
Drain flow passage: 75
First drain hose: 75a
Second drain hose: 75b
Opening: 7420b
Guide surface: 7430a
Drain: drain
Average water level: Level
Rotational axis: O
Control part: P
Input unit: P1
Display: P2

## Claims

1. A filter device for a washing machine, comprising:
a first chamber comprising a water inlet allowing wash water to be introduced therethrough;
a second chamber having a water outlet for the wash water;
a filter accommodated in the second chamber; and
an opening allowing the first chamber and the second chamber to communicate with each other therethrough,
wherein the wash water introduced through the water inlet sequentially passes through the first chamber, the opening, and the filter, and is discharged through the water outlet.

2. A filter device for a washing machine, comprising:
a case having a water inlet and a water outlet;
a partition wall arranged inside the case and dividing an interior of the case into a first chamber and a second chamber;
an opening provided in the partition wall and allowing the first chamber and the second chamber to communicate with each other therethrough; and
a filter accommodated in the second chamber of the case,
wherein the wash water introduced through the water inlet sequentially passes through the first chamber, the opening, and the filter, and is discharged through the water outlet.

3. The filter device of claim 1 or 2, further comprising:
a guide portion disposed downstream of the opening to guide the wash water flowing into the second chamber from the opening to side surfaces of the filter,
wherein the wash water discharged through the opening and guided to the side surfaces of the filter by the guide portion separates particles stuck to the side surfaces of the filter and directs the separated particles to a bottom portion of the filter.

4. The filter device of claim 3, wherein the guide portion comprises a guide surface extending downward from the opening and toward the side surfaces of the filter.

5. The filter device of claim 4, wherein the guide portion is an inclined surface of an inner wall of the opening.

6. The filter device of claim 1 or 2, wherein the filter comprises left and right side surfaces, front and rear surfaces, and a bottom surface,
wherein a vertical length of the left and right side surfaces is greater than a distance between the left and right side surfaces, such that particles separated from the left and right side surfaces are stacked up from lower portions of the left and right side surfaces so as to maintain filtering performance of the left and right side surfaces of the filter.

7. The filter device of claim 6, wherein the filter comprises the left and right side surfaces, the front and rear surfaces, and the bottom surface,
wherein a distance between the front and rear surfaces is greater than the distance between the left and right side surfaces.

8. The filter device of claim 7, wherein the filter is detachable from the second chamber.

9. The filter device of claim 8, further comprising:
a drawer configured to accommodate the filter,
wherein the drawer is withdrawable from the second chamber in a forward direction.

10. The filter device of claim 9, wherein the drawer comprises a discharge portion communicating with the water outlet.

11. The filter device of claim 9, wherein the filter is removable from the drawer through an open top of the drawer.

12. The filter device of claim 9, wherein left and right side surfaces of the drawer are spaced apart from the left and right side surfaces of the filter by a predetermined distance,
wherein a bottom surface of the drawer is spaced apart from the bottom surface of the filter by a predetermined distance.

13. The filter device of claim 12, wherein the drawer comprises at least one of:
spacer protrusions provided on the both side surfaces of the drawer; or
a support provided on the bottom surface of the drawer.

14. The filter device of claim 9, wherein the bottom surface of the drawer is inclined downward toward the water outlet.

15. The filter device of claim 1, further comprising:
a coupling member detachably attached to an outer surface of one of the first chamber and the second chamber at a predetermined position.

16. The filter device of claim 2, further comprising:
a coupling member detachably attached to an outer surface of the case at a predetermined position.

17. The filter device of claim 15 or 16, wherein the coupling member comprises a magnetic member or friction member.

18. The filter device of claim 1 or 2, wherein the water inlet and water outlet are positioned on a rear side of the washing machine equipped with the filter device.

19. A washing machine including a drain flow passage, comprising:
the filter device of claim 1 or 2 arranged in the drain flow passage.
